# EUROPEAN PATENT SPECIFICATION

(11) **EP 1 683 878 B1**
(45) Date of publication and mention of the grant of the patent: **17.09.2008**
(21) Application number: 06001441.2
(22) Date of filing: 24.01.2006
(51) Int. Cl.: C22B 34/36, C22B 13/00, C23F 11/00, B22F 1/00, A62D 3/00

(54) **Method for suppressing the leachability of certain metals like tungsten and lead**
Verfahren zum Unterdrücken der Auflösung bestimmter Metalle wie Wolfram und Blei
Procédé pour supprimer la dissolution de métaux particuliers comme le tungstène et le plomb

(30) Priority: 24.01.2005 US 593535 P; 09.01.2006 US 306704
(43) Date of publication of application: 26.07.2006
(73) Proprietor: OSRAM SYLVANIA INC., Danvers, MA 01923 (US)
(72) Inventor: Lunk, Hans-Joachim, Towanda, PA 18848 (US); Morgan, Ricky D., Milan, PA 18831 (US); Stevens, Henry J., Athens, PA 18810 (US)
(74) Representative: Grünecker, Kinkeldey, Stockmair & Schwanhäusser Anwaltssozietät

(56) References cited:
- EP-A- 1 457 578
- PATENT ABSTRACTS OF JAPAN vol. 2003, no. 11, 5 November 2003 (2003-11-05) & JP 2003 211144 A (KURITA WATER IND LTD), 29 July 2003 (2003-07-29)
- PATENT ABSTRACTS OF JAPAN vol. 012, no. 096 (C-484), 29 March 1988 (1988-03-29) & JP 62 230622 A (SAKAI CHEM IND CO LTD; others: 01), 9 October 1987 (1987-10-09)

## Description

### Background of the Invention

The use of tungsten powder or pressed tungsten powder compacts in pure or mixtures with other powders under natural conditions in the presence of water and oxygen (e.g., air or dissolved oxygen) leads to the formation of a water-soluble, tungsten-containing species. The first step of the reaction can be described as follows:

W + H₂O + 1.5 O₂ --> WO₄²⁻ + 2 H⁺.

The monotungstate ion, WO₄²⁻, reacts with H⁺, resulting in the formation of the soluble metatungstate anion [H₂W₁₂O₄₀]⁶⁻:

12 WO₄²⁻ + 18 H⁺ --> [H₂W₁₂O₄₀]⁶⁻ + 8 H₂O.

The formation of this polyoxometalate anion is detectable by its typical UV absorption maximum at 256 nm (molar extinction coefficient, ∈₂₅₆ = 3.8x10⁴ L(mol·cm)⁻¹).

Document JP-A-2003-211144 discloses a method for insolubilizing toxic heavy metals like lead, mercury, cadmium and copper in soils to prevent their elusion. The immobilizing agent used in said method is a tungstate of monovalent or divalent metals, for instance calcium tungstate.

### Summary of the Invention

The interaction of certain metals, in particular lead, tin and antimony, with tungsten in the presence of water and oxygen has been discovered to significantly suppress the leachability of the tungsten. In the presence of water and oxygen, the added metals by themselves undergo oxidation forming aqueous metallic cations. The metallic cations Mⁿ⁺ then interact with an aqueous tungsten species such as the metatungstate anion, [H₂W₁₂O₄₀]⁶⁻, forming precipitates of tungstates like M^{II}WO₄ and M^{III}₂(WO₄)₃, which are characterized by extremely low solubilities under these conditions. For example, lead undergoes oxidation to form the aqueous Pb²⁺ cation which interacts with the metatungstate anion to form a precipitate of lead tungstate, PbWO₄, which has a very low solubility of 2.7x10⁻⁶ mol/L at room temperature. Instead of metallic lead, lead oxide or an aqueous solution of lead nitrate may be utilized to provide the aqueous Pb²⁺ cation.

Other metals such as silver, nickel, and copper actually increase the rate of leachability of tungsten most likely through galvanic means.

Preferably, the aqueous medium contacting the metals has a pH of less than about 9, and, more preferably, from about 5 to about 9.

The interaction of Sn, Sb and Pb with tungsten has a synergistic effect in which the leachability of each metal is suppressed. This means that tungsten has the ability to suppress the leachability of these same metals, in particular lead. For example, tungsten may be added to the lead-contaminated soil in order to suppress lead contamination of the ground water by forming lead tungstate which has a very low solubility. Preferably, this could be done by adding powdered tungsten metal to the contaminated soil or by placing solid tungsten-containing articles in the soil where it may come into contact with the lead-contaminated ground water. More preferably, a solution of sodium tungstate may be sprayed onto the lead-contaminated soil. In this way, at least some of the lead that has leached into the ground water should then be precipitated as lead tungstate. This method could be used in particular for suppressing lead contamination at outdoor shooting ranges, e.g. at a gun club or military reservation.

### Detailed Description of the Invention

For a better understanding of the present invention, together with other and further objects, advantages and capabilities thereof, reference is made to the following disclosure and appended claims.

Metal powder blends and a W/Sn compact as well as pure tungsten powder as a control were subjected to one or more leaching tests. In one series of tests, an aqueous buffer solution having a pH of 7.2 was prepared by dissolving 4.03 mg KCI, 50.6 mg CaSO₄·2H₂O, 123.2 mg MgSO₄·7H₂O, 96.0 mg NaHCO₃, and 209.3 mg of a noncomplexing tertiary amine, 3-(N-morpholino) propanesulfonic acid (MOPS) per liter of water. Ten gram amounts of as-reduced tungsten metal powder together with separate amounts of antimony (100 mg), lead (100 mg), PbO (200 mg or 500 mg) or tin metal powder (7.54 g) were placed in 500-ml volumes of the aqueous buffer solution in 1-liter NALGENE© (PP) Erlenmeyer flasks to observe the leaching characteristics of the tungsten. In another flask, two 2-g pressed tungsten/tin compacts (~57 wt.% W, ~43 wt.% Sn) were added to 500 ml of the aqueous buffer solution. For a control, 10 g of the above tungsten metal powder alone was also placed in 500 ml of the aqueous buffer solution.

In another series of tests, 10-g amounts of tungsten metal powder were placed in 500-ml volumes of unbuffered aqueous solutions of lead nitrate (pH 4.4) in 1-liter NALGENE© (PP) Erlenmeyer flasks.

In both series of tests, the flasks were loosely covered with an aluminum foil and continuously shaken in a dark, thermostated room (72°F) with a LAB-LINE® Force orbital open air shaker, Model 4690, for a period of 28 days. Periodic 25-ml samples of the leachate solutions were taken and analyzed for pH, oxygen content, and tungsten content at 7, 14, 21, and 28 days. A constant oxygen concentration of 8.3 ± 0.2 mg/liter was observed for the entire testing period of 28 days.

The results of these tests are shown in Table I. The amount of leached tungsten detected in solution is expressed as a percentage of the original amount of tungsten powder. As can be seen, the concentration of tungsten in the leachate from the control sample increases from 0.32% tungsten at 7 days to 0.78% tungsten at 28 days. When antimony and tin are present, the leachability of the tungsten is greatly suppressed. In the case of tin metal powder, less than one-half of the amount of tungsten was present in the leachate after 28 days as compared to the control. The level of suppression was even greater in the case of antimony powder where less than one-tenth of the amount of tungsten was leached after 28 days. There was no significant level of tungsten leached from the W/Sn compact (detection limit 0.4 mg W/L).

The tests with the solid lead oxide and aqueous solutions of lead nitrate showed that lead in the form of Pb²⁺ is also a very efficient suppressant of tungsten's leachability. Lead metal shows a lesser effect compared to PbO and aqueous Pb(NO₃)₂ because the lead metal must be oxidized to aqueous Pb²⁺ prior to its reaction with leached tungsten. The leachate's lead concentration for the aqueous Pb(NO₃)₂ tests measurably decreased during the 28-day test period indicating that tungsten metal (and aqueous tungstate anions) could be used to remove lead from lead-contaminated water.

**Table I:Tungsten content in leachate expressed as a % of initial W amount**

| Sample | Metal or Metal Cation Additive | Starting pH | %W 7-day | %W 14-day | %W 21-day | %W 28-day |
|---|---|---|---|---|---|---|
| Control W powder | --- | 7.2 | 0.32 | 0.49 | 0.65 | 0.78 |
| W powder | Sn powder (75 wt.%) | 7.2 | 0.13 | 0.20 | 0.24 | 0.28 |
| W powder | Sb powder (1 wt.%) | 7.2 | 0.06 | 0.07 | 0.07 | 0.07 |
| W/Sn Compact | --- | 7.2 | 0.00 | 0.00 | 0.00 | 0.00 |
| W powder | Pb powder (1 wt.%) | 7.2 | 0.28 | 0.47 | 0.59 | 0.68 |
| W powder | PbO (2 wt.%) | 7.2 | 0.00 | 0.04 | 0.16 | 0.21 |
| W powder | PbO (5 wt.%) | 7.2 | 0.00 | 0.00 | 0.00 | 0.02 |
| W powder | 0.01M Pb(NO₃)₂ | 4.4 | 0.00 | 0.00 | 0.00 | 0.00 |
| W powder | 0.001 M Pb(NO₃)₂ | 4.4 | 0.00 | 0.00 | 0.00 | 0.00 |
| W powder | 0.0005M Pb(NO₃)₂ | 4.4 | 0.00 | 0.00 | 0.00 | 0.04 |
| W powder | 0.0001M Pb(NO₃)₂ | 4.4 | 0.00 | 0.04 | 0.13 | 0.23 |

Similar tests of the leachability of tungsten in the presence of silver, nickel or copper metal powders showed that the presence of these metals greatly increased tungsten leachability, on the order of 7 to 15 times greater than tungsten metal powder alone.

While embodiments of the present invention have been described in the foregoing specification, it is to be understood that the present invention is defined by the following claims when read in light of the specification.

## Claims

1. A method of suppressing leachability of tungsten metal, comprising:
contacting an aqueous medium in the presence with oxygen with tungsten metal and at least one other metal selected from tin, antimony, and lead whereby the leachability of the tungsten metal into the aqueous medium is suppressed.

2. The method of claim 1 wherein the aqueous medium has a pH of less than 9.

3. The method of claim 2 wherein the pH of the aqueous medium is from 5 to 9.

4. The method of claim 1 wherein a tungstate of the other metal is formed.

5. The method of claim 1 wherein lead tungstate is formed.

6. The method of claim 1 wherein the contact with the aqueous medium causes an aqueous tungstate anion and an aqueous cation of the other metal to form whereby the tungstate anion and cation of the other metal react to form a tungstate of the other metal which is not substantially soluble in the aqueous medium.

7. A method for removing a soluble lead species from aqueous solution comprising contacting the aqueous solution containing the soluble lead species with tungsten metal in the presence of oxygen to form a lead tungstate precipitate.

## Patentansprüche

1. Verfahren zum Unterdrücken der Auslaugbarkeit von Wolframmetall, umfassend:
das In-Kontakt-Bringen eines wässrigen Mediums in Gegenwart von Sauerstoff mit Wolframmetall und wenigstens einem anderen Metall, das aus Zinn, Antimon und Blei ausgewählt wird, so dass die Auslaugbarkeit des Wolframmetalls in das wässrige Medium unterdrückt wird.

2. Verfahren nach Anspruch 1, wobei das wässrige Medium einen pH-Wert von weniger als 9 hat.

3. Verfahren nach Anspruch 2, wobei der pH-Wert des wässrigen Mediums von 5 bis 9 beträgt.

4. Verfahren nach Anspruch 1, wobei ein Wolframat des anderen Metalls gebildet wird.

5. Verfahren nach Anspruch 1, wobei Bleiwolframat gebildet wird.

6. Verfahren nach Anspruch 1, wobei der Kontakt mit dem wässrigen Medium bewirkt, dass ein wässriges Wolframat-Anion und ein wässriges Kation des anderen Metalls entstehen, so dass das Wolframat-Anion und das Kation des anderen Metalls reagieren und ein Wolframat des anderen Metalls entsteht, das im Wesentlichen nicht in dem wässrigen Medium löslich ist.

7. Verfahren zum Entfernen einer löslichen Bleispezies aus wässriger Lösung, umfassend das In-Kontakt-Bringen der wässrigen Lösung, die die lösliche Bleispezies enthält, mit Wolframmetall in Gegenwart von Sauerstoff, um einen Bleiwolframat-Niederschlag zu erzeugen.

## Revendications

1. Méthode pour empêcher l'aptitude d'un métal tungstène à subir une lixiviation, comprenant l'étape qui consiste à :
mettre en contact un milieu aqueux en présence d'oxygène avec le métal tungstène et au moins un autre métal choisi parmi l'étain, l'antimoine et le plomb, ce qui empêche le métal tungstène d'être entraîné dans le milieu aqueux par lixiviation.

2. Méthode selon la revendication 1, selon laquelle le milieu aqueux a un pH de moins de 9.

3. Méthode selon la revendication 2, selon laquelle le pH du milieu aqueux est de 5 à 9.

4. Méthode selon la revendication 1, selon laquelle un tungstate de l'autre métal est formé.

5. Méthode selon la revendication 1, selon laquelle du tungstate de plomb est formé.

6. Méthode selon la revendication 1, selon laquelle le contact avec le milieu aqueux provoque la formation d'un anion de tungstate aqueux et d'un cation aqueux de l'autre métal, moyennant quoi l'anion de tungstate et le cation de l'autre métal réagissent pour former un tungstate de l'autre métal qui n'est quasiment pas soluble dans le milieu aqueux.

7. Méthode pour éliminer une espèce de plomb soluble de la solution aqueuse, comprenant l'étape qui consiste à mettre en contact la solution aqueuse contenant l'espèce de plomb soluble avec du métal tungstène en présence d'oxygène pour former un précipité de tungstate de plomb.
